# EUROPEAN PATENT SPECIFICATION

(11) **EP 3 944 080 B1**
(45) Date of publication and mention of the grant of the patent: **03.01.2024**
(21) Application number: 21192496.4
(22) Date of filing: 20.11.2012
(51) Int. Cl.: G06F 9/451, G06F 3/0481, G06T 19/00

(54) **A METHOD, AN APPARATUS AND A COMPUTER PROGRAM PRODUCT FOR CREATING A USER INTERFACE VIEW**
VERFAHREN, VORRICHTUNG UND COMPUTERPROGRAMMPRODUKT ZUR ERZEUGUNG EINER BENUTZERSCHNITTSTELLENANSICHT
PROCÉDÉ, APPAREIL ET PRODUIT-PROGRAMME INFORMATIQUE PERMETTANT DE CRÉER UNE VUE D'INTERFACE UTILISATEUR

(43) Date of publication of application: 26.01.2022
(62) Divisional of application: 12888745.2
(73) Proprietor: Jolla OY, 33210 Tampere (FI)
(72) Inventor: Swindell, Thomas, Cambridge (GB); Roppola, Jaakko, Mutala (FI); Harju, Mikko, Kangasala (FI); Schüle, Martin, Tampere (FI)
(74) Representative: Aaltonen, Janne Lari Antero

(56) References cited:
- US-A1- 2005 037 815
- US-A1- 2008 307 341
- US-A1- 2010 110 101

## Description

### Field of the Invention

This invention relates to a method, an apparatus and a computer program product for providing graphical user interface view on a display of an apparatus.

### Background of the Invention

Portable computers, such as smart phones and tablet devices, are becoming more popular among users and are replacing conventional mobile phones due to their performance. These portable computers have a graphical user interface that includes graphical elements that are shown on the display of the apparatus to a user. The graphical user interface typically consists of a background, selection menus, text, icons and selectable buttons. When talking on graphical user interface, term "theme" is used to define the general appearance (e.g. colouring) of the graphical user interface. Term "theme" is used to describe also the look and feel of the user interface.

Portable computers often have a built-in theme library comprising several computer's brand-related themes having different colouring modes. These themes are selectable by a user in order to change the throughout appearance of the graphical user interface. In addition to these pre-defined themes, pre-created themes can also be downloaded from a network service. There are also services that make it possible for a user to create his/her own theme and to download it to his/her portable computer. Such services list the elements used in the graphical user interface and let the user select colouring for them. When the user is content with the selections, the theme is stored and downloaded to the portable computer.

It is realized that users are increasingly more biased towards customizing the appearance of the user interface of the portable computer according to their own desires. However, todays customization possibilities are based on either vendor-pre-defined themes or theme creator applications that require a network connection and much computing power, but also great amount of graphical elements that need to be varied between user interface views.

Thus, there is a need for a solution that generates user interface view (look and feel and/or theme) dynamically and enables users to customize the graphical user interface easily with less pre-defined resources.

In a document US2010/110101A1, there are disclosed user interface color scheme customization systems and methods. In certain exemplary embodiments, data representative of a color scheme including a plurality of colors is maintained, a parameter for each of the colors is shifted by a same offset to generate another color scheme, and the other color scheme is associated with a graphical user interface. In certain embodiments, the shifting preserves at least one of a hue relationship and a contrast relationship between the colors in the color scheme.

In another document US2005/037815A1, there is described a portable electronic apparatus that includes an ambient light sensor for measuring ambient light levels, a display for displaying text and icons, on a background, and a processor coupled to the display, and the light sensor for causing indicia to be displayed on the display, and adjusting the color and/or size characteristics of the indicia and/or background according to the ambient light level measured through the ambient light sensor.

In yet another document US2008/0307341A1, there is described a method for rendering graphical objects. A context of a user interface element in a graphical user interface is identified. The identified context is mapped to one or more effects. A graphical object associated with the user interface element is rendered using the effects.

### Summary of the Invention

This invention is targeted to such a need in order to provide user interface view (look and feel and/or theme) dynamically and enables users to customize the graphical user interface easily with less pre-defined resources. In addition to that, the invention proposes creating user interface view from layers where the theme elements are divided up among the layers. This makes the theme more dynamic compared to the solutions of prior art. The present invention relates to a method, an apparatus and a computer program product for creating a user interface view to a display.

According to the invention, there is provided a method according to claim 1.

According to the invention, there is provided an apparatus according to claim 8.

According to the invention, there is provided a computer program product according to claim 12.

According to the invention, the user interface components comprise a background component configured to provide a background for the user interface view. According to the invention, the background component is defined according to the created theme. According to the invention, the content component comprises graphical elements, wherein the method comprises defining at least the colouring of the graphical elements according to the theme. According to the invention, the theme is created one or more of the following steps: collecting a hue histogram of hue of the source image, collecting a pixel histogram of pixel values, selecting the most common hue as dominant colour from the hue histogram, finding median value from the pixel histogram, blur the source image, darken the source image depending on the median value, use the source image as a background image for the theme, use the dominant colour as theme colour, select one or more font colours from the hue histogram, modifying alpha value and/or colour of the effect component. According to an embodiment, the background component is adjusted by means of the sensor data. According to an embodiment, the effect component is a diffusing component, wherein the method comprises adjusting the user interface view with respect to the other user interface components by means of said diffusing component. According to an embodiment, the effect component is configured to create an effect for at least part of the content component. According to an embodiment, the effect component is configured to change illumination levels on the user interface view by means of bump mapping. According to an embodiment, the alpha channels of the effect component are adjusted. According to an embodiment, the alpha channels of the effect component are adjusted according to state of a certain functionality. According to an embodiment, sensor data concerning the ambient environment is received, and the effect component is adjusted by means of said sensor data. According to an embodiment, the sensor data is received from one or more of the following: magnetometer, accelerometer, positioning means, camera or thermometer.

### Description of the Drawings

The invention is now described in more detailed with reference to the drawings, where
- Figure 1: illustrates an example of a portable computer;
- Figure 2: illustrates another example of a portable computer;
- Figure 3: illustrates an example a multilayer user interface;
- Figure 4: illustrates an example of an automatic theme creation;
- Figure 5: illustrates a method for creating a user interface view;
- Figure 6: illustrates another example of multilayer user interface view;
- Figure 7a: illustrates an example of a layer providing an illumination area;
- Figure 7b: illustrates an example of one illumination generating layer;
- Figure 7c: illustrates an example of two illumination generating layers;
- Figure 8a: illustrates an example of an effect component;
- Figure 8b: illustrates an example of an effect component in a user interface view; and
- Figures 9: illustrates an example of a user interface view on a display.

### Detailed Description of the Invention

The present invention is described next by using a smart phone as an example of the apparatus. However, the teachings of the present solution may be utilized also in other computing devices having a display and a graphical user interface. Examples of such devices are tablet and laptop computers.

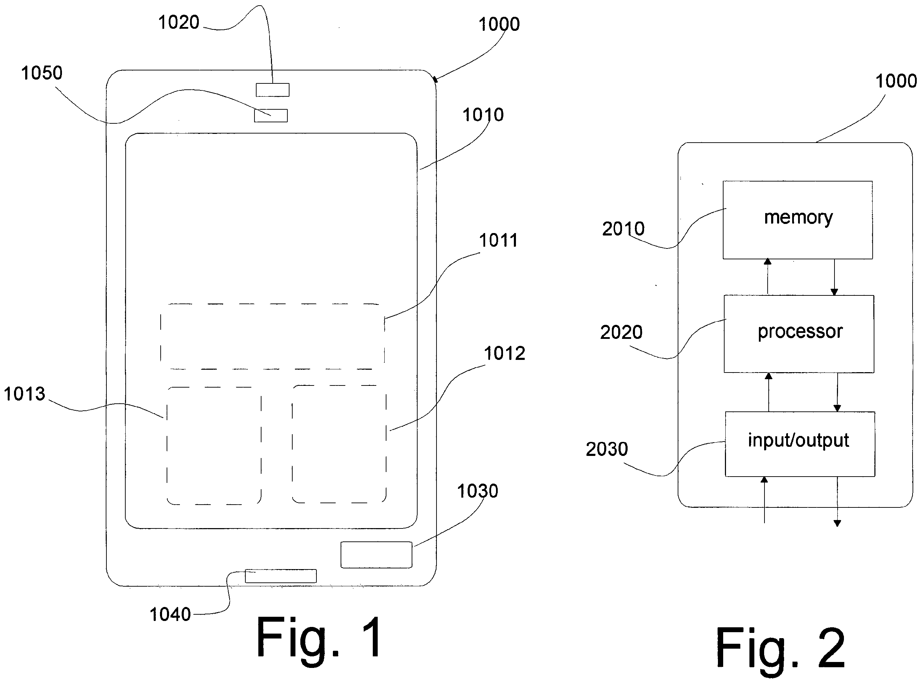

Figure 1 shows an example of an apparatus (1000). The apparatus (1000) comprises a display (1010), which may be a touch-screen display (e.g. capacitive, resistive). The display can consist of a backlight element and a LCD (Liquid Crystal Display) in the front of the backlight. The backlight can be even (i.e. same illumination level throughout the display) or the distribution of the light can be controlled depending on the backlight type.

The apparatus according to Figure 1 further comprises at least one camera (1020) being situated on same side of the apparatus with the display, or on the opposite side. According to an embodiment, the apparatus comprises two cameras placed on opposite sides of the apparatus (1000), e.g. front side (i.e. display side) and rear side of the apparatus. According to yet an embodiment, the apparatus have a data transmission connection to an external camera to receive image data. The apparatus (1000) may have one or more physical buttons (1030) and one or more touch-screen buttons (1012-1013). In an embodiment, the apparatus (1000) comprises either physical buttons or touch-screen buttons. The apparatus (1000) comprises a keypad being provided on the display as a touch-screen keypad (1011) and/or on the housing of the apparatus (1000) as a physical keypad. The apparatus (1000) may further comprise a microphone (1040) and loudspeaker (1050) to receive and to transmit audio. The apparatus (1000) may also comprise communication interface (not shown in Figure 1) configured to connect the apparatus to another device, e.g. a server or a terminal, via wireless and/or wired network, and to receive and/or transmit data by said wireless/wired network. Wireless communication can be based on any cellular or non-cellular technology, for example GSM (Global System for Mobile communication), WCDMA (Wideband Code Division Multiple Access), CDMA (Code Division Multiple Access). Wireless communication can also relate to short range communication such as Wireless Local Area Network (WLAN), Bluetooth etc. The apparatus (1000) also comprises a battery or similar powering means. The apparatus (1000) may comprise one or more sensors, such as accelerometer, gyroscope, magnetometer etc. The apparatus (1000) may also comprise a vibrator for providing movement of the apparatus in silent mode and for providing tactile feedback in user interface situations.

The apparatus (1000) further comprises a memory (Figure 2: 2010) configured to store computer program code used for operating the apparatus and for providing user interface, and to store user interface data. User interface related software can be implemented as separate application and/or it can be part of the operating system of the apparatus. The application and/or operating system can be upgraded by a server system to alter configuration and functionality of the user interface. Additionally the application and/or operating system can be upgraded via personal computer / laptop to alter configuration and functionality of the user interface. User interface may include default values and it may include values which can be modified by the users. The apparatus (1000) comprises a processor (2020) that executes the program code to perform the apparatus' functionality. The apparatus further comprises an input/output element (2030) to provide e.g. user interface views to a display (Figure 1: 1010) of the apparatus, or audio via loudspeaker (Figure 1: 1050), or vibration using vibrating element/functionality of the apparatus (1000) and to receive user input through input elements, such as buttons (Figure 1: 1011, 1012, 1013, 1030), microphone (Figure 1: 1040) or camera (Figure 1: 1020). The input buttons can be used by fingers, stylus, touch pad, mouse, joystick, etc.

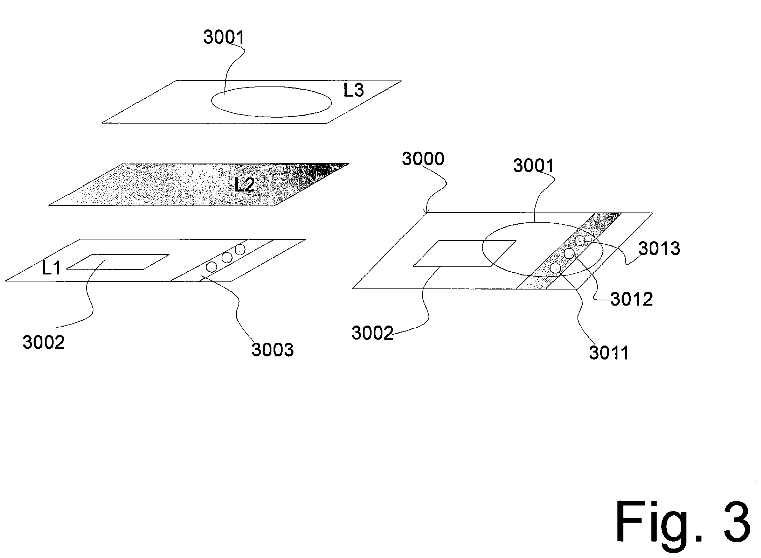

According to an embodiment, the user interface view can be understood to be created from multiple user interface components. There can be different kinds of user interface components which can be classified according to their nature into various groups. In the example of Figure 3, the user interface components are layerized as virtual layers L1-L3. One of the component groups relates to content components containing the graphical elements, i.e. content elements, of the user interface. The graphical element is a written or pictorial representation of an element, such as text, icon, menu. In Figure 3, this group is shown as layer L3, which is the most upper layer from the user's point of view.

One of the component groups may relate to background components and comprise the background image and can provide illumination effect for the graphical elements and illumination level for the user interface view. In Figure 3, this group is shown as layer L1.

There can be yet other type of graphical user interface components to create a user interface view, for example a diffusing component that is configured to blur (diffuse) the view with respect to the other user interface components. In Figure 3, such a diffusing component is shown as layer L2, which can be situated between layers L3 and L1.

As said, the background component comprises the background image and may define the illumination level for the view. The background component may define bump map parameters to be used for the user interface view. For the purposes of the present invention, the bump mapping is implemented by software. However, in some embodiments, the bump mapping can be created by using back light of the display. For example, if the back light is given by LED (Light Emitting Diode) where the illumination can be controlled within a picture (sub areas of the display or per pixel), the back light can be used as bump map. The background image in the background component can be modified to form illumination type of effects in the user interface. For example, an area 3002 in the background image can be adjusted to have larger illumination values that normally. The modification of the illumination values would result in effect of said area looking more bright than other areas in the user interface. Alternatively for changing illumination levels for making the digital light effect, bump mapping can be used.

Bump mapping is a technique by means of which normal angle (seen from user's point of view) of a brightness or shading of the pixel is changed slightly in order to provide an illumination effect for that pixel. The pixel itself is not obstructed but the shading of it is modified. As a result of bump mapping, the pixel can be seen to moved closer to a user by a distance e.g. creating a bump.

As mentioned earlier, the diffusing component, a, also called a glossy glass component, is used to diffuse (blur) at least one other user interface component (in Figure 3, the background component). The diffusing component may also comprise e.g. a moving image as the blur image in order to generate e.g. movements to the other component.

The content component can comprise graphical elements, such as text, icons, menus.

In the following, a method for customizing the user interface components automatically is discussed. It is known to have a theme for graphical elements in the user interface The theme defines the common appearance for the graphical elements, e.g. a common colouring for fonts, for icons, for background etc. The theme can be changed according to moods of the user, whereby the appearance of the user interface is changed accordingly. It is realized that the theme creates look and feel for the user interface.

Each of the above user interface components, independently on the implementation means, can have certain characteristics which can be customized. This customization refers basically setting up / defining / configuring / creating of a theme for the graphical user interface, which modifies the appearance of the graphical user interface so that the various user interface components share one or more certain visual factors being defined by the theme. According to embodiments, in order to perform customization, an inputted or stored image is processed to obtain parameters by means of which colouring scheme, illumination levels, dark levels, bright levels, glossy effects etc. being represented by various user interface components can be modified when the user interface view is rendered.

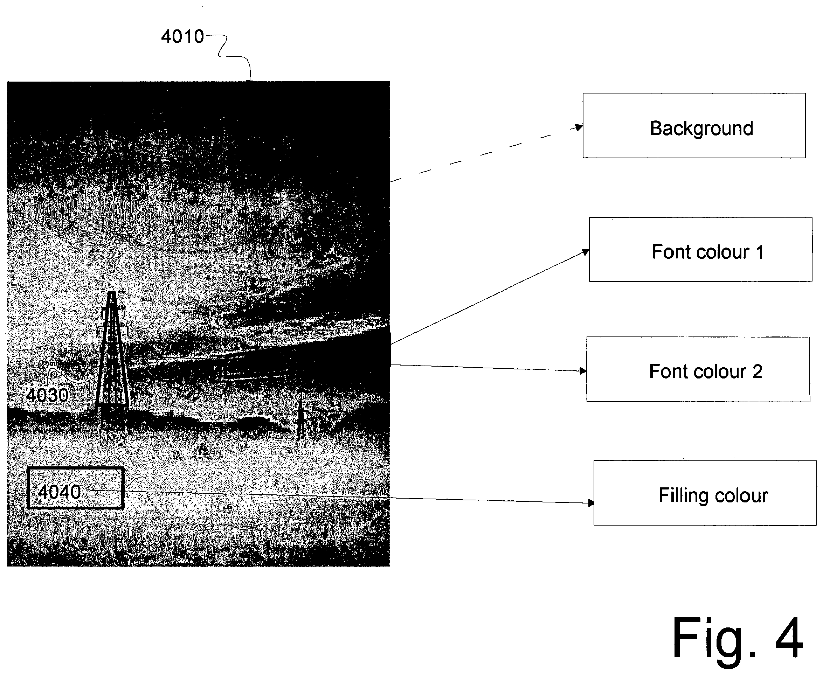

Figure 4 illustrates an example of an image (4010) that is analysed to have theme for a user interface. It is known to use an arbitrary user-selected image as a background of a user interface, however other graphical elements (text, icons, menus, etc.) are not automatically adjusted according to it. In the present solution, the image can be used as a background for the user interface, but also other graphical elements and effects are automatically customized according to the data obtainable from the image. For the purposes of the present invention, the image can be a still image captured by the apparatus or downloaded from a service. The image can also be a video or some other moving images.

The image (4010) is analysed to determine colour space to be used for graphical elements for example in the content component. The analysis finds certain characteristics of the picture, for example contrast level changes, contours, areas with certain colours (or colour space) in colour map, e.g. certain range of RGB values (Red Green Blue) or other data such as luminance or chrominance, areas with certain brightness (minimum brightness to maximum brightness), objects, symbols etc.

For example, area 4020 is an area which corresponds to a relative size of entire figure with certain grey levels. An object 4030 is recognized from the image by using e.g. pattern recognition methods. Area 4040 is an area with certain brightness level. According to an embodiment, the image analysis is carried out by following steps:
- collect a hue histogram of hue values (in HSV (Hue Saturation Values) colour space) of image pixels for pixels whose saturation is non-zero;
- collect a pixel histogram of pixel values;
- select the most common hue as dominant colour from the hue histogram. If there are only gray/black/white pixels, use a default value;
- find median value from the pixel histogram;
- blur the source image to have a background image;
- darken the background image depending on the median value;
   ∘ if the median value is higher than 50%, darken the background image with 0.5 RGB pixel multiplier
   ∘ else darken the background image with 0.75 RGB pixel multiplier
- reduce visibility of colour banding by adding noise;
- select one or more colours from the hue histogram
- create a theme of the background image and the dominant colour and the other colours;
- apply the generated theme to user interface view.

The method can contain all the previous steps or any combination of the selected steps.

It is realized that the theme contains customization on various user interface components, i.e. not only in the content component, but also in other components (background component, effect component, diffusing component) defining effects for the user interface view.

Turning to Figure 4, the average colour of area (4040) can be used for background colour for graphical elements in the content component. An example a graphical element is a form, a shape, having a background colour (filling colour) of the average colour of area (4040). The average colour of area (4020) is used as font colour 1. The colour of object (4030) is used as font colour 2. The background colour and font colours 1, 2 can then be used in a theme of the user interface view. Additionally the source image (4010) can be used as background image for the background component.

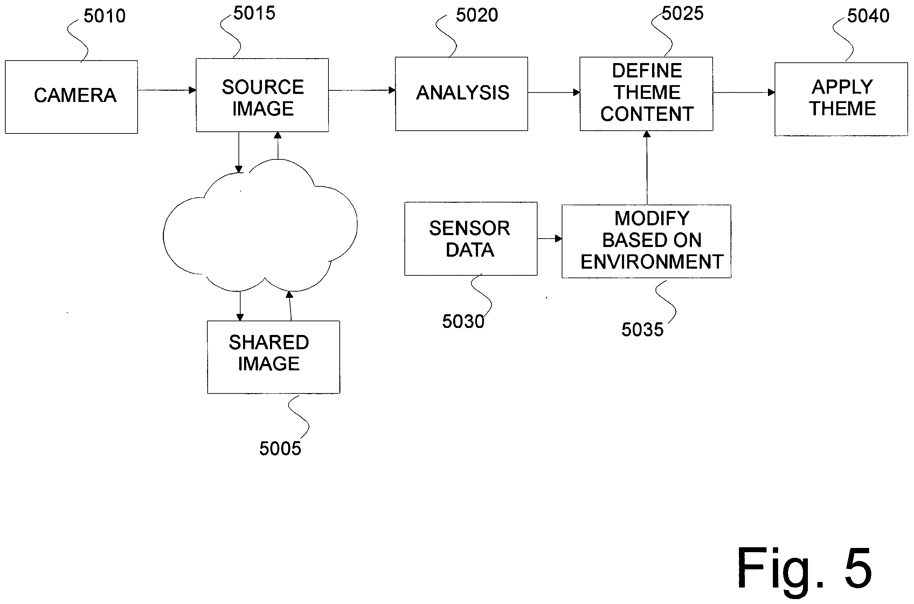

Theme creation method according to an embodiment is shown in Figure 5. A source image (5015) is captured by a camera (5010) or obtained from the service (5005). The service can be a social networking service such as Facebook, Twitter, etc. or an image gallery such as Flickr, Picasa, etc. from where the image is obtained. The source image is then analysed (5020) e.g. by using the above described method to have a theme content (5025) comprising e.g. the colouring mode.

The theme can be further modified (5035) dynamically according to data (5030) being received from sensors sensing the environment. The sensor data can be received from one or more of the following sensors: magnetometer, accelerometer, location, camera, temperature. For example, a front camera can be used to determine the ambient illumination level and the direction of illumination, which information is utilized for determining illumination effect parameters for the user interface components. When the theme content is ready, the theme (i.e. colours, illumination effects) is applied (5040) to all or some of the visual software components on the user interface view. It is to be noticed that each time a sensor data is received, the created theme can be adjusted only with respect to some of the user interface components. For example, if it is noticed that a surrounding illumination level has decreased, only the illumination level defined by the background component is modified or the diffusing component is adjusted accordingly. However, there is no need to touch the content component or the overall colouring of the user interface view.

Turning back to Figure 3, showing a user interface view (3000) being created from user interface components, such as layers L1-L3. The content layer L3 comprises a graphical element (3001) and the background layer L1 comprises a bitmap (3002) as background image. Bump mapping can be used to create illumination effect for the bitmap (3002). Also the background layer L1 comprises dots within area (3003), which can be illuminated to indicate whether a certain functionality shown on the content layer L3 is selected or not. The diffuse layer L2 can be used to diffuse the light / image content coming from the background layer L1. It is realized that layers L3 and L1 have content which can be used together to indicate functionality to the user. Layer L3 defines which functionality and layer L1 defines the state of the functionality with the illumination (state "on", "active", "running", "in use" with light (3011, 3012); state "off", "inactive", "stopped", "not in use" without light (3013)). This deviates greatly from what is known in this technical field. Typically such indication is made with graphics and bitmaps, e.g. by varying the colouring of an icon from green to red or by attaching a text next to the icon describing the state of the functionality. However, with the user interface structure according to the present embodiments, the amount of graphical elements on layer L3 can be reduced, because indications can be implemented with illumination.

According to an embodiment the illumination levels of layer L1 can be altered according to a sensor data of apparatus (1000) such as camera 1020, as mentioned above. For example if the camera 1020 (or other illumination measurement mean) indicates that the apparatus is being used in dark illumination conditions the illumination level of the layer L1 can be decreased. Similarly if the apparatus is used in bright illumination environment illumination level of layer L1 can be increased to modify theme dynamically. Additionally sensor data such as accelerometer can be used to detect orientation of the apparatus and the themes can be varied based on the orientation. For example direction of bump mapping vectors can be changes to take in account the orientation of the apparatus (gravity effect).

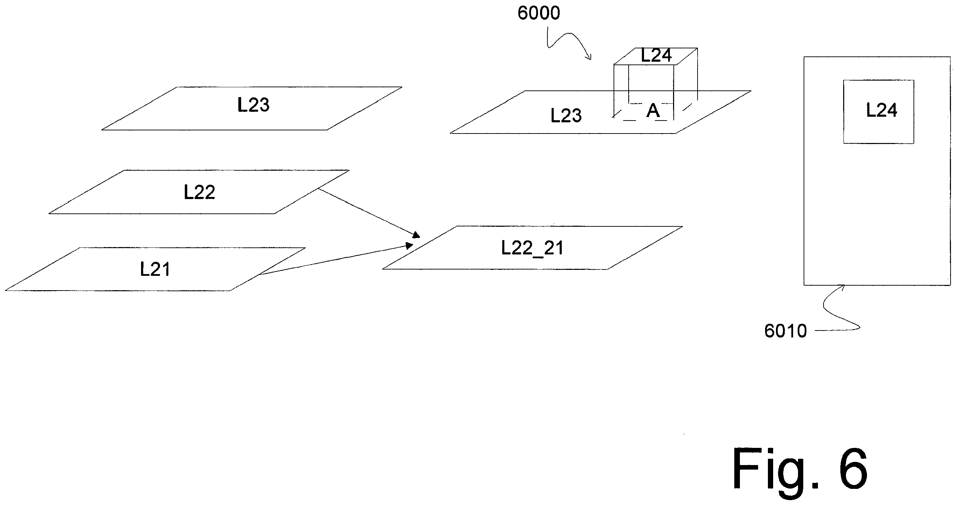

Figure 6 shows yet another example of a user interface view. Also in this example, the user interface components are displayed in such a manner that the user interface view appears for the user as being constructed from multiple layers. The user interface view is created by user interface components L21, L22, L23 that are layerized or overlap each other.. Component L21 is the background image (e.g. a photo), component L22 is the diffusing component and component L23 is the content component. The diffuse component L22 can be a component having alpha channel value 0.1, for example, i.e. transparent. The content componentL23 may comprise graphical elements, such as text, icons, menu, which typically change as the user uses the apparatus. Components L21 and L22 can be merged together as L22_21 component if the component s L21 and L22 are static for a time being. In practice said merging of two graphical elements L21 and L22 can be done in multiple ways for example using OpenGL graphics libraries.

Alpha channel values define a transparency of an object, a user interface component, e.g. a layer, a graphical element, bitmap, where alpha channel value 0 relates to total transparency and alpha value 1 relates to non-transparency. When diffuse layer L22 has an alpha channel value 0.1, the content of layers below (i.e. L21) can be seen through the diffuse layer. If the diffuse layer L22 has an alpha channel value close to 1, the content of layers below (i.e. L21) cannot be seen.

In order to create an illumination effect on area A of the content component L23, an effect component L24 can be located on top of the content component L23 (as shown with reference 6000). The effect component L24 can be dimensioned to be smaller than the entire picture to save computational power. It is appreciated that the effect component L24 can also cover the entire picture. Reference 6010 shows a user interface view with effect component L24.

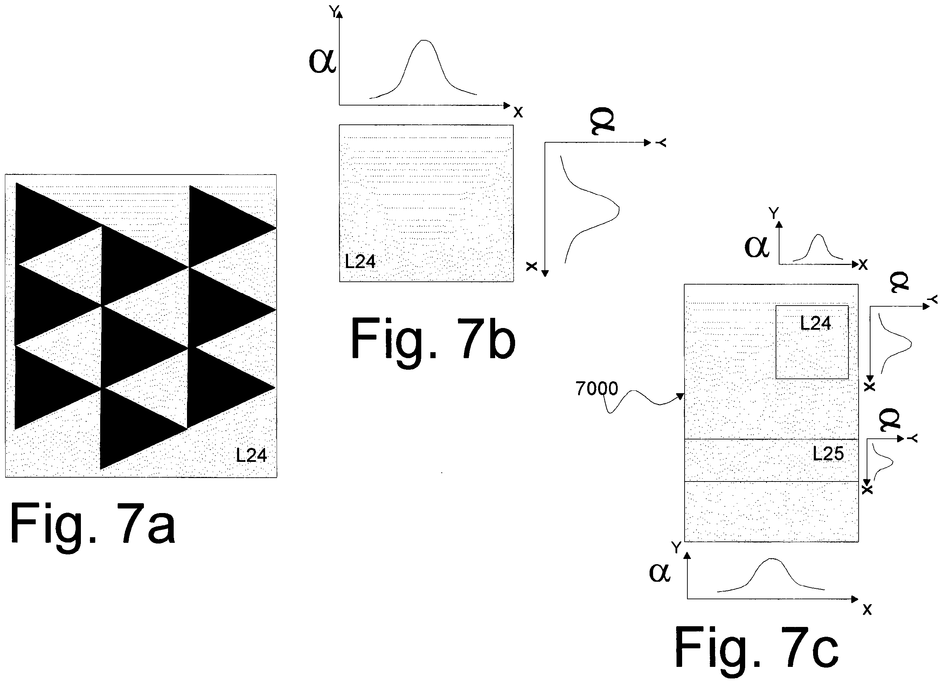

Figure 7a shows details of effect component L24 according to an embodiment. The effect component L24 can be a bitmap. The bitmap may contain visual data, e.g. triangle shapes as in Figure 7a, but also other shapes such as circles, squares or arbitrary bitmaps including solid bitmap. Black colour of triangles indicates the colour of the effect component L24 (which can be of any colour, e.g. white, red, green, blue, ...). White colour triangles (and other white area) in the Figure 7a indicates fully transparent area. Preferably, the ratio of fully transparent areas of the effect component L24 to the coloured areas is about 50:50. The colour can be automatically selected according to the theme having been created from a source image, wherein the colour can be the most bright colour in the source image. Alternatively, the colour can be a default colour defined in the user interface software.

In order to implement a smooth light box, an alpha channel (α) is applied to pixels of the effect component L24 as shown in Figure 7b. This results in a bitmap with bright spot (of selected colour) in the middle, since alpha value in the middle (X-axis- and Y-axis-wise) is large. The effect component L24 is completely transparent from the sides since the alpha value (α) is low or close to zero in the sides. Preferably, the alpha channel is applied only to colour triangles of the component L24 (i.e. black colour triangles) and alpha channel of white is kept 0 i.e. transparent.

Basically alpha values create contour plots with alpha value (α) close to 1 in the middle with decreasing alpha value as the radius from the middle of the effect component L24 increases. The alpha value (α) at the edge is zero or very close to zero.

Figure 7c illustrates an example of a user interface view 7000 having two effect components L24, L25. In this example the effect components L24, L25 are also light generating layers on top of the content component. Similarly, as in Figure 7b, the light boxes for effect components L24, L25 are created by applying alpha channels (α) to pixels of the effect components L24, L25. As a result of this, bitmaps with bright spot (of selected colour) in the middle are generated, since alpha value in the middle (X-axis- and Y-axis-wise) is large. The effect components L24, L25 are completely transparent from the sides since the alpha value (α) is low or close to zero in the sides.

According to the embodiments some or all visual characteristics of said components (L21, L22, L_22_21, L23 and L24) are defined by theme. The theme related parameters can be created automatically from a source figure as discussed earlier. For example, the form factor of alpha channel function (see for example Figure 7b) can be correlated with form factor from certain details of the source image. For example, if dominant forms in the source image are circles, then the applied alpha channel contour in top of bitmap on component L24 can be for example circular. If, based on created theme, dominant colour in the source figure is red, the colour of the component L24 bit map can be set to red. This would result in "red light" type of illumination created by the effect component L24. Benefit of using said technique of modifying effect component L24 with the theme instead of graphical elements such as icons is saving of computational power.

As discussed, sensor data of apparatus (1000) such as camera (1020) can be used as input to alter theme parameters related to alpha values. Sensor data can be used to take in consideration illumination conditions of the environment. For example if the camera (1020) (or other illumination measurement mean) indicates that the apparatus is being used in dark illumination conditions alpha values of applied alpha channel can be decreased. Similarly if the apparatus is used in bright illumination environment the alpha channel values can be increased (i.e. made closer to 1).

Further, according to embodiments, the effect component L24 graphics (bitmap) can be modified using bump mapping. The orientation and characteristics of said bump mapping are parameters in a theme. The bump map parameters related to the bitmap in effect component L24 can be altered for example to take in account orientation of the device i.e., the theme can be dynamically altered.

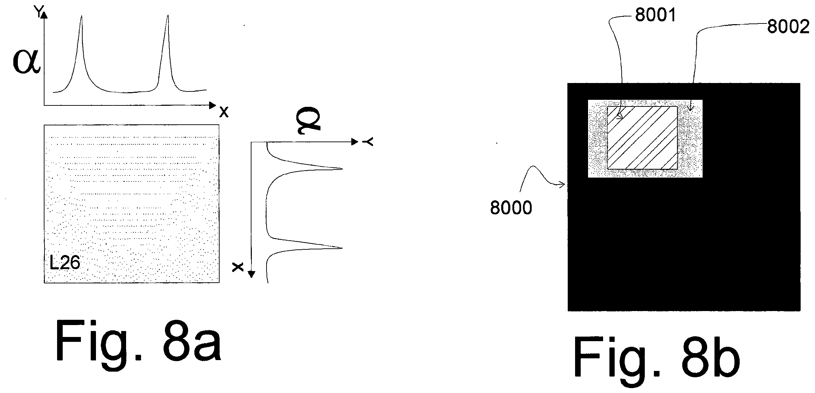

Figures 8a illustrates yet another example of an effect component L26, the purpose of which is to highlight a graphical element on the content component by glowing. This can be implemented by applying alpha channels (α) to pixels of the effect components L26 as shown in Figure 8a. As a result of this, a bitmap with transparent area in the middle are generated, since alpha value in the middle (X-axis- and Y-axis-wise) is zero. The effect component L26 has bright sides since the alpha value (α) is large in the sides. When this kind of an effect component (Figure 8b: 8002) is used when rendering the user interface view (Figure 8b:8000), a graphical element (8001) "underneath" the effect component (8002) seems to glow.

This kind of an implementation is useful in a situation, where graphical element 8001 is an icon of a certain functionality. When the functionality is running, the alpha channels are applied to the effect component as shown in Figure 8a. When the functionality is inactivated, the alpha channels may be reset to zero.

The user interface components can be implemented in various ways. For example, when using OpenGL software libraries the "layer like" representation of the user interface is created by painting the elements in the graphical memory in certain order. The order can be generated by painting the elements from "bottom to top" or it can be such that only visible elements are constructed in the display memory and further rendered.

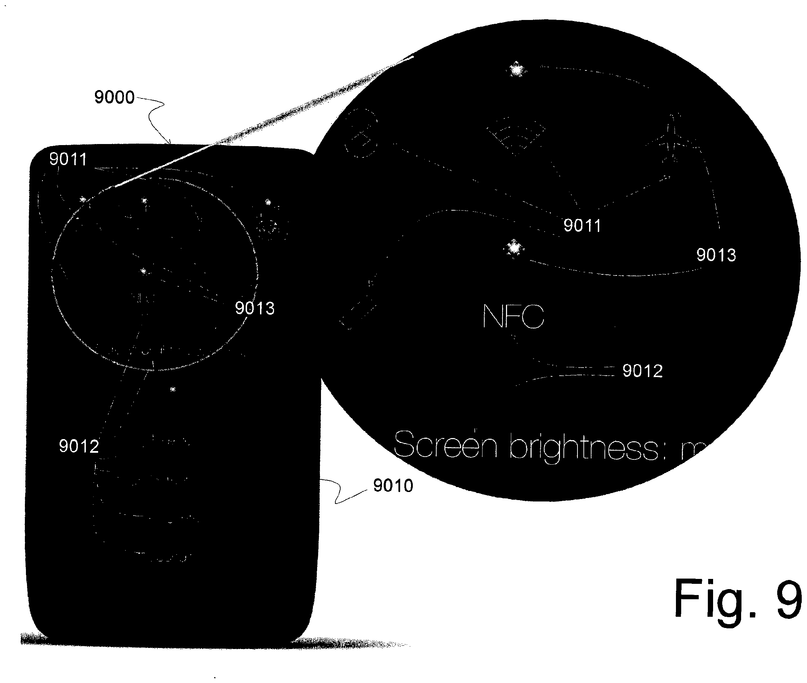

Figure 9 illustrates an example of a computer (9000) having a display (9010). The display (9010) displays a user interface view, where the text (9012) and icons (9011) are located on the content component, and where the illumination effect (9013) is provided by additional effect components, as shown in Figures 7a-7c i.e. by setting an effect component L24 (see Fig 6.) in appropriate position or by bump mapping as shown in Figure 3. The illumination effect is generated to small areas (9013) to indicate whether the functionality defined by graphical elements (9011) is active or not. According to embodiments, the colour of the illumination effect is defined in a theme and can be altered dynamically for example based on sensor data or user input.

The present invention concerns a graphical user interface that is dynamic in a sense that it can be customized according to user's desires easily and with less pre-defined resources. Different components of the graphical user interface provide different effects for the user interface view and also provides state indication for functionality without modifying the graphical element representing the functionality. The invention represents a substantial advancement compared to the user interface view customization methods of related art, because the present solution does not need any other input from the user but a source image to create automatically image-related appearance throughout the user interface views.

The present invention is not limited solely to the above-presented embodiments, but it can be modified within the teachings of the appended claims.

## Claims

1. A method for providing a user interface view on a display (1010, 9010) of an apparatus (1000, 9000), wherein the apparatus comprises the display, at least one illumination measurement mean (1020) and a processing unit (2020),
the method comprises
layerizing user interface components as virtual layers for creating the user interface view, the user interface components comprising at least
a background component (L1, L21), comprising one or more areas which can be illuminated (3003, 9013), for defining a state of a functionality of the apparatus,
content components (L3, L23), comprising graphical elements (3001, 8001, 9011, 9012) for indicating the state of the functionality of the apparatus to a user, and
at least one effect component (L24, L25, L26, 8002) on top of the content components for changing illumination levels of at least a part of the content components,
- obtaining a source image (4010, 5015);
- creating a theme from the source image by collecting a hue histogram and a pixel histogram of the source image, by the processing unit, for defining a common appearance of the content components and the illumination levels of the content components;
- creating a background image (3002) for the created theme by blurring and darkening the source image depending on the pixel histogram of the source image;
- applying the created theme to the graphical elements;
- determining an ambient illumination level (5030) of an ambient environment of the apparatus by the at least one illumination measurement mean; and
- adjusting an illumination level of the background component based on the determined ambient illumination level, wherein adjusting the illumination level of the background component comprises indicating the state of functionality shown on the content components by illuminating the one or more areas in the background component, active states being presented with light (3011, 3012), and inactive states having no light (3013), by the display having a backlight element.

2. The method according to claim 1, **wherein** adjusting the illumination level of the background component further comprises at least one of:
- altering the illumination level of the background component by decreasing the illumination level in dark ambient illumination conditions or increasing the illumination level in bright ambient illumination conditions,
- providing a diffusing component (L2, L22) between the background component and the content components, for blurring a content coming from the background component and a part of the content components, based on the determined ambient illumination level.

3. The method according to claim 1 or 2, **wherein** the method further comprises
- detecting an orientation of the apparatus by an accelerometer of the apparatus;
- adjusting the at least one effect component by changing directions of bump mapping vectors based on the detected orientation.

4. The method according to any of the preceding claims, **wherein** in addition to collecting the hue histogram and the pixel histogram, creating the theme further comprises at least one of:
- selecting a common hue as a dominant colour from the hue histogram, and using it as a theme colour,
- selecting one or more font colours from the hue histogram,
- selecting a filling colour to be used when painting backgrounds for the graphical elements,
- finding a median value from the pixel histogram.

5. The method according to any of the preceding claims, **wherein** obtaining the source image comprises capturing the source image by the at least one illumination measurement mean, wherein the at least one illumination measurement mean is at least one camera (5010) or downloading the source image from an image gallery of a service.

6. The method according to any of the preceding claims, **wherein** creating the theme from the source image further comprises:
- finding parameters of the source image comprising contrast level changes, contours, areas with certain colours in colour map, areas with certain luminance or chrominance, areas with certain brightness, objects, symbols; and
- modifying colouring scheme, illumination levels, dark levels, bright levels, glossy effects being represented by the user interface components based on the parameters.

7. The method according to any of the preceding claims, **wherein** the method further comprises
- modifying a transparency of a diffuse component by changing an alpha value of the diffuse component according to the determined ambient illumination level;
- adjusting alpha values of the at least one effect component according to the state of the functionality.

8. An apparatus (1000, 9000) comprising a display (1010, 9010), at least one illumination measurement mean (1020) configured to determine an ambient illumination level (5030), a processing unit (2020) configured to provide a user interface view (3000, 6010, 7000, 8000) on the display of the apparatus, process a source image (4010, 5015) and layerize user interface components as virtual layers for creating the user interface view, the user interface components comprising at least
a background component (L1, L21), comprising one or more areas which can be illuminated (3003, 9013), configured to define a state of a functionality of the apparatus,
content components (L3, L23), comprising graphical elements (3001, 8001, 9011, 9012) configured to indicate the state of the functionality of the apparatus to a user, and
at least one effect component (L24, L25, L26, 8002) on top of the content components configured to change illumination levels of at least a part of the content components,
**wherein** the apparatus is configured to carry out the method according to any of claims 1-7.

9. The apparatus according to claim 8, wherein the display comprises a backlight element configured to change illumination levels.

10. The apparatus according to claim 8 or 9, wherein the at least one illumination measurement mean is at least one camera (5010) configured to determine the ambient illumination level and a direction of illumination, and wherein the processing unit is configured to utilise the ambient illumination level and the direction of illumination for determining illumination effect parameters for the user interface components.

11. The apparatus according to any of the preceding claims 8-10, wherein the apparatus further comprises an accelerometer configured to detect an orientation of the apparatus, and wherein the processing unit is configured to adjust the at least one effect component by changing directions of bump mapping vectors based on the detected orientation.

12. A computer program for providing a user interface view on a display of an apparatus comprising instructions adapted to perform the method according to any of claims 1-7, when the computer program is executed on a processing unit of the apparatus according to any of claims 8-11.

## Patentansprüche

1. Verfahren zum Bereitstellen einer Benutzerschnittstellenansicht auf einer Anzeige (1010, 9010) einer Vorrichtung (1000, 9000), wobei die Vorrichtung die Anzeige, mindestens ein Beleuchtungsmessmittel (1020) und eine Verarbeitungseinheit (2020) umfasst,
wobei das Verfahren umfasst
Teilen in Schichten von Benutzerschnittstellenkomponenten als virtuelle Schichten zum Erzeugen der Benutzerschnittstellenansicht, die Benutzerschnittstellenkomponenten umfassend mindestens
eine Hintergrundkomponente (L1, L21), umfassend einen oder mehrere Bereiche, die beleuchtet werden können (3003, 9013), zum Definieren eines Zustands einer Funktion der Vorrichtung,
Inhaltskomponenten (L3, L23), umfassend grafische Elemente (3001, 8001, 9011, 9012) zum Angeben des Zustands der Funktion der Vorrichtung für einen Benutzer, und
mindestens eine Effektkomponente (L24, L25, L26, 8002) oben auf den Inhaltskomponenten zum Ändern von Beleuchtungsstufen mindestens eines Teils der Inhaltskomponenten,
- Erhalten eines Quellbildes (4010, 5015);
- Erzeugen eines Skins aus dem Quellbild durch Sammeln eines Tönungshistogramms und eines Pixelhistogramms des Quellbildes durch die Verarbeitungseinheit zum Definieren eines gemeinsamen Erscheinungsbildes der Inhaltskomponenten und der Beleuchtungsstufen der Inhaltskomponenten;
- Erzeugen eines Hintergrundbildes (3002) für den erzeugten Skin durch Verwischen und Abdunkeln des Quellbildes in Abhängigkeit von dem Pixelhistogramm des Quellbildes;
- Anwenden des erzeugten Skins auf die grafischen Elemente;
- Bestimmen einer Umgebungsbeleuchtungsstufe (5030) eines Umgebungsumfelds der Vorrichtung durch das mindestens eine Beleuchtungsmessmittel; und
- Anpassen einer Beleuchtungsstufe der Hintergrundkomponente basierend auf der bestimmten Umgebungsbeleuchtungsstufe, wobei das Anpassen der Beleuchtungsstufe der Hintergrundkomponente das Angeben des Zustands der Funktion, der auf den Inhaltskomponenten gezeigt wird, durch Beleuchten des einen oder der mehreren Bereiche in der Hintergrundkomponente umfasst, wobei aktive Zustände mit Licht (3011, 3012) dargestellt werden und inaktive Zustände kein Licht (3013) aufweisen, durch die Anzeige, die ein Hintergrundlichtelement aufweist.

2. Verfahren nach Anspruch 1, **wobei** das Anpassen der Beleuchtungsstufe der Hintergrundkomponente ferner mindestens eines umfasst von:
- Wechseln der Beleuchtungsstufe der Hintergrundkomponente durch Verringern der Beleuchtungsstufe in dunklen Umgebungsbeleuchtungsbedingungen oder Erhöhen der Beleuchtungsstufe in hellen Umgebungsbeleuchtungsbedingungen,
- Bereitstellen einer Streukomponente (L2, L22) zwischen der Hintergrundkomponente und den Inhaltskomponenten zum Verwischen eines Inhalts, der von der Hintergrundkomponente und einem Teil der Inhaltskomponenten kommt, basierend auf der bestimmten Beleuchtungsstufe.

3. Verfahren nach Anspruch 1 oder 2, **wobei** das Verfahren ferner umfasst
- Erkennen einer Ausrichtung der Vorrichtung durch einen Beschleunigungsmesser der Vorrichtung;
- Anpassen der mindestens einen Effektkomponente durch Ändern von Richtungen von Bump-Mapping-Vektoren basierend auf der erkannten Ausrichtung.

4. Verfahren nach einem der vorstehenden Ansprüche, **wobei** zusätzlich zu dem Sammeln des Tönungshistogramms und des Pixelhistogramms das Erzeugen des Skins ferner mindestens eines umfasst von:
- Auswählen einer gemeinsamen Tönung als eine dominante Farbe aus dem Tönungshistogramm und Verwenden dieser als eine Skinfarbe,
- Auswählen einer oder mehrerer Schriftfarben aus dem Tönungshistogramm,
- Auswählen einer zu verwendenden Füllfarbe wenn Hintergründe für die grafischen Elemente coloriert werden,
- Finden eines Medianwerts aus dem Pixelhistogramm.

5. Verfahren nach einem der vorstehenden Ansprüche, **wobei** das Erhalten des Quellbildes ein Erfassen des Quellbildes durch das mindestens eine Beleuchtungsmessmittel, wobei das mindestens eine Beleuchtungsmessmittel mindestens eine Kamera (5010) ist, oder ein Herunterladen des Quellbildes von einer Bildgalerie eines Dienstes umfasst.

6. Verfahren nach einem der vorstehenden Ansprüche, **wobei** das Erzeugen des Skins aus dem Quellbild ferner umfasst:
- Finden von Parametern des Quellbildes, umfassend Kontraststufenänderungen, Konturen, Bereiche mit gewissen Farben in einer Farbtabelle, Bereiche mit gewisser Luminanz oder Chrominanz, Bereiche mit gewisser/gewissen Helligkeit, Objekten, Symbolen; und
- Modifizieren von Farbgebung, Beleuchtungsstufen, dunklen Stufen, hellen Stufen, glänzenden Effekten, die durch die Benutzerschnittstellenkomponenten, basierend auf den Parametern, repräsentiert werden.

7. Verfahren nach einem der vorstehenden Ansprüche, **wobei** das Verfahren ferner umfasst
- Modifizieren einer Transparenz einer Streukomponente durch Ändern eines Alpha-Werts der Streukomponente gemäß der bestimmten Umgebungsbeleuchtungsstufe;
- Anpassen von Alpha-Werten der mindestens einen Effektkomponente gemäß dem Zustand der Funktion.

8. Vorrichtung (1000, 9000), umfassend eine Anzeige (1010, 9010), mindestens ein Beleuchtungsmessmittel (1020), das konfiguriert ist, um eine Umgebungsbeleuchtungsstufe (5030) zu bestimmen, eine Verarbeitungseinheit (2020), die konfiguriert ist, um eine Benutzerschnittstellenansicht (3000, 6010, 7000, 8000) auf der Anzeige der Vorrichtung bereitzustellen, ein Quellbild (4010, 5015) zu verarbeiten und die Benutzerschnittstellenkomponenten als virtuelle Schichten zum Erzeugen der Benutzerschnittstellenansicht in Schichten zu teilen, die Benutzerschnittstellenkomponenten mindestens umfassend
eine Hintergrundkomponente (L1, L21), umfassend einen oder mehrere Bereiche, die beleuchtet werden können (3003, 9013), die konfiguriert sind, um einen Zustand einer Funktion der Vorrichtung zu definieren,
Inhaltskomponenten (L3, L23), umfassend grafische Elemente (3001, 8001, 9011, 9012), die konfiguriert sind, um den Zustand der Funktion der Vorrichtung einem Benutzer anzugeben, und
mindestens eine Effektkomponente (L24, L25, L26, 8002) oben auf den Inhaltskomponenten, die konfiguriert ist, um Beleuchtungsstufen mindestens eines Teils der Inhaltskomponenten zu ändern,
**wobei** die Vorrichtung konfiguriert ist, um das Verfahren nach einem der Ansprüche 1 bis 7 umzusetzen.

9. Vorrichtung nach Anspruch 8, wobei die Anzeige ein Hintergrundbeleuchtungselement umfasst, das konfiguriert ist, um Beleuchtungsstufen zu ändern.

10. Vorrichtung nach Anspruch 8 oder 9, wobei das mindestens eine Beleuchtungsmessmittel mindestens eine Kamera (5010) ist, die konfiguriert ist, um die Umgebungsbeleuchtungsstufe und eine Beleuchtungsrichtung zu bestimmen, und wobei die Verarbeitungseinheit konfiguriert ist, um die Umgebungsbeleuchtungsstufe und die Beleuchtungsrichtung zum Bestimmen von Beleuchtungseffektparametern für die Benutzerschnittstellenkomponenten einzusetzen.

11. Vorrichtung nach einem der vorstehenden Ansprüche 8 bis 10, wobei die Vorrichtung ferner einen Beschleunigungsmesser umfasst, der konfiguriert ist, um eine Ausrichtung der Vorrichtung zu erkennen, und wobei die Verarbeitungseinheit konfiguriert ist, um die mindestens eine Effektkomponente durch Ändern von Richtungen von Bump-Mapping-Vektoren basierend auf der erkannten Ausrichtung anzupassen.

12. Computerprogramm zum Bereitstellen einer Benutzerschnittstellenansicht auf einer Anzeige einer Vorrichtung umfassend Anweisungen, die geeignet sind, um das Verfahren nach einem der Ansprüche 1 bis 7 durchzuführen, wenn das Computerprogramm auf einer Verarbeitungseinheit der Vorrichtung nach einem der Ansprüche 8 bis 11 ausgeführt wird.

## Revendications

1. Procédé visant à fournir une vue d'interface utilisateur sur un afficheur (1010, 9010) d'un appareil (1000, 9000), l'appareil comprenant l'afficheur, au moins un moyen de mesure d'éclairage (1020) et une unité de traitement (2020),
le procédé comprenant
la superposition de composantes d'interface utilisateur en tant que couches virtuelles pour créer la vue d'interface utilisateur, les composantes d'interface utilisateur comprenant au moins
une composante d'arrière-plan (L1, L21), comprenant une ou plusieurs zones qui peuvent être éclairées (3003, 9013), afin de définir un état d'une fonctionnalité de l'appareil,
des composantes de contenu (L3, L23), comprenant des éléments graphiques (3001, 8001, 9011, 9012) afin d'indiquer l'état de la fonctionnalité de l'appareil à un utilisateur, et
au moins une composante d'effet (L24, L25, L26, 8002) au-dessus des composantes de contenu pour changer les niveaux d'éclairage d'au moins une partie des composantes de contenu,
- l'obtention d'une image source (4010, 5015) ;
- la création d'un thème à partir de l'image source en collectant un histogramme de tonalités chromatiques et un histogramme de pixels de l'image source, par l'unité de traitement, pour définir une apparence commune des composantes de contenu et des niveaux d'éclairage des composantes de contenu ;
- la création d'une image d'arrière-plan (3002) pour le thème créé par floutage et assombrissement de l'image source en fonction de l'histogramme de pixels de l'image source ;
- l'application du thème créé aux éléments graphiques ;
- la détermination d'un niveau d'éclairage ambiant (5030) d'un environnement ambiant de l'appareil par l'au moins un moyen de mesure d'éclairage ; et
- le réglage d'un niveau d'éclairage de la composante d'arrière-plan sur la base du niveau d'éclairage ambiant déterminé, le réglage du niveau d'éclairage de la composante d'arrière-plan comprenant l'indication de l'état de fonctionnalité montré sur les composantes de contenu par éclairage de la ou des zones dans la composante d'arrière-plan, les états actifs étant présentés avec de la lumière (3011, 3012), et les états inactifs étant dépourvus de lumière (3013), par l'afficheur ayant un élément de rétroéclairage.

2. Procédé selon la revendication 1, **dans lequel** le réglage du niveau d'éclairage de la composante d'arrière-plan comprend en outre au moins l'une parmi :
- la modification du niveau d'éclairage de la composante d'arrière-plan en diminuant le niveau d'éclairage dans des conditions d'éclairage ambiant sombres ou en augmentant le niveau d'éclairage dans des conditions d'éclairage ambiant lumineuses,
- la fourniture d'une composante de diffusion (L2, L22) entre la composante d'arrière-plan et les composantes de contenu, pour flouter un contenu provenant de la composante d'arrière-plan et une partie des composantes de contenu, sur la base du niveau d'éclairage ambiant déterminé.

3. Procédé selon la revendication 1 ou 2, **dans lequel** le procédé comprend en outre
- la détection d'une orientation de l'appareil par un accéléromètre de l'appareil ;
- le réglage de l'au moins une composante d'effet en changeant des directions des vecteurs de rendu de texture sur la base de l'orientation détectée.

4. Procédé selon l'une quelconque des revendications précédentes, **dans lequel** en plus de la collecte de l'histogramme de tonalités chromatiques et de l'histogramme de pixels, la création du thème comprend en outre au moins l'une parmi :
- la sélection d'une tonalité chromatique commune comme couleur dominante à partir de l'histogramme de tonalités chromatiques, et son utilisation en tant que couleur de thème,
- la sélection d'une ou plusieurs couleurs de police à partir de l'histogramme de tonalités chromatiques,
- la sélection d'une couleur de remplissage à utiliser lors de la création des arrière-plans pour les éléments graphiques,
- la détermination d'une valeur médiane à partir de l'histogramme de pixels.

5. Procédé selon l'une quelconque des revendications précédentes, **dans lequel** l'obtention de l'image source comprend la capture de l'image source par l'au moins un moyen de mesure d'éclairage, l'au moins un moyen de mesure d'éclairage étant au moins une caméra (5010) ou le téléchargement de l'image source à partir d'une galerie d'images d'un service.

6. Procédé selon l'une quelconque des revendications précédentes, **dans lequel** la création du thème à partir de l'image source comprend en outre :
- la détermination de paramètres de l'image source comprenant des changements de niveau de contraste, des contours, des zones présentant certaines couleurs d'une carte de couleurs, des zones présentant une certaine luminance ou chrominance, des zones présentant une certaine luminosité, certains objets, symboles ; et
- la modification de la méthode de coloration, de niveaux d'éclairage, de niveaux de basse luminosité, de niveaux de luminosité élevée, d'effets brillants qui sont représentés par les composantes d'interface utilisateur sur la base des paramètres.

7. Procédé selon l'une quelconque des revendications précédentes, **dans lequel** le procédé comprend en outre
- la modification d'une transparence d'une composante diffuse en changeant une valeur alpha de la composante diffuse en fonction du niveau d'éclairage ambiant déterminé ;
- le réglage des valeurs alpha de l'au moins une composante d'effet selon l'état de la fonctionnalité.

8. Appareil (1000, 9000) comprenant un afficheur (1010, 9010), au moins un moyen de mesure d'éclairage (1020) configuré pour déterminer un niveau d'éclairage ambiant (5030), une unité de traitement (2020) configurée pour fournir une vue d'interface utilisateur (3000, 6010, 7000, 8000) sur l'afficheur de l'appareil, traiter une image source (4010, 5015) et superposer des composantes d'interface utilisateur en tant que couches virtuelles pour créer la vue d'interface utilisateur, les composantes d'interface utilisateur comprenant au moins
une composante d'arrière-plan (L1, L21), comprenant une ou plusieurs zones qui peuvent être éclairées (3003, 9013), configurée pour définir un état d'une fonctionnalité de l'appareil,
des composantes de contenu (L3, L23), comprenant des éléments graphiques (3001, 8001, 9011, 9012), configurées pour indiquer l'état de la fonctionnalité de l'appareil à un utilisateur, et
au moins une composante d'effet (L24, L25, L26, 8002) au-dessus des composantes de contenu, configurée pour changer des niveaux d'éclairage d'au moins une partie des composantes de contenu,
**dans lequel** l'appareil est configuré pour exécuter le procédé selon l'une quelconque des revendications 1 à 7.

9. Appareil selon la revendication 8, dans lequel l'afficheur comprend un élément de rétroéclairage configuré pour changer des niveaux d'éclairage.

10. Appareil selon la revendication 8 ou 9, dans lequel l'au moins un moyen de mesure d'éclairage est au moins une caméra (5010) configurée pour déterminer le niveau d'éclairage ambiant et une direction d'éclairage, et dans lequel l'unité de traitement est configurée pour utiliser le niveau d'éclairage ambiant et la direction d'éclairage pour déterminer des paramètres d'effet d'éclairage pour les composantes d'interface utilisateur.

11. Appareil selon l'une quelconque des revendications précédentes 8 à 10, dans lequel l'appareil comprend en outre un accéléromètre configuré pour détecter une orientation de l'appareil, et dans lequel l'unité de traitement est configurée pour régler l'au moins une composante d'effet en changeant des directions de vecteurs de rendu de texture sur la base de l'orientation détectée.

12. Programme informatique destiné à fournir une vue d'interface utilisateur sur un afficheur d'un appareil comprenant des instructions adaptées pour mettre en oeuvre le procédé selon l'une quelconque des revendications 1 à 7, lorsque le programme informatique est exécuté sur une unité de traitement de l'appareil selon l'une quelconque des revendications 8 à 11.
